# EUROPEAN PATENT APPLICATION

(11) **EP 2 011 847 A1**
(43) Date of publication of application: **07.01.2009**
(21) Application number: 08011957.1
(22) Date of filing: 02.07.2008
(51) Int. Cl.: C09K 11/62, C09K 11/72, C01B 25/08

(54) **Light-emitting material, light emitting-element, light-emitting device, and electronic device and method for manufacturing thereof**

(30) Priority: 06.07.2007 JP 2007178012
(71) Applicant: Semiconductor Energy Laboratory Co, Ltd., Atsugi-shi, Kanagawa 243-0036 (JP)
(72) Inventor: Miyuki, Hosoba, Atsugi-shi Kanagawa-ken 243-0036 (JP)
(74) Representative: Grünecker, Kinkeldey, Stockmair & Schwanhäusser Anwaltssozietät

(57) **Abstract**

It is an object to provide a light-emitting material with higher emission luminance than conventional one in terms of a crystalline structure of the light-emitting material, as a light-emitting material using an inorganic compound. First baking is performed after mixing gallium arsenide, gallium phosphide, or gallium antimonide with manganese to form a first baked product, second baking is performed after mixing a base material with an element for forming a luminescent center material or a compound including the element to form a second baked product, and third baking is performed after mixing the first baked product with the second baked product, so that a light-emitting material is manufactured.

## Description

### BACKGROUND OF THE INVENTION

### 1. Field of the Invention

The present invention relates to a light-emitting material and a method for manufacturing the light-emitting material. The present invention further relates to a light-emitting element using electroluminescence. Moreover, the present invention relates to a light-emitting device and an electronic device each having the light-emitting element.

### 2. Description of the Related Art

In recent years, a display device in a television set, a mobile phone, a digital camera, or the like has been required to be flat and thin, and as a display device for meeting this requirement, a display device utilizing a self-luminous light-emitting element has attracted attention. One of the self-luminous light-emitting elements is a light-emitting element utilizing electroluminescence (EL), and this light-emitting element includes a light-emitting material interposed between a pair of electrodes and can provide emission from the light-emitting material by voltage application.

Such a self-luminous light-emitting element has advantages over a liquid crystal display element, such as high visibility of the pixels and no need of backlight, and it is suitable for a flat panel display element. Another major advantage of such a light-emitting element is that it can be manufactured to be thin and lightweight. In addition, another advantage of such a light-emitting element is that the response speed is very fast.

Furthermore, such self-luminous light-emitting element can be formed into a film form; therefore, by forming an element with a large area, plane light emission can be easily obtained. This is an advantage which is difficult to be obtained by point light sources typified by an incandescent lamp and an LED or linear light sources typified by a fluorescent lamp. Accordingly, the light-emitting element is extremely effective for use as an area light source applicable to a lighting system and the like.

A light-emitting element utilizing electroluminescence is classified depending on whether a light-emitting material is an organic compound or an inorganic compound. In general, the former is called an organic EL element and the latter is called an inorganic EL element.

The inorganic EL element is classified according to its element structure into a distributed inorganic EL element and a thin-film inorganic EL element. These differ in that the former includes a light-emitting layer in which particles of a light-emitting material are dispersed in a binder, and the latter includes a light-emitting layer formed of a thin film of a light-emitting material. However, they share the fact that they both need electrons accelerated by a high electric field. Mechanisms for obtaining light emission include donor-acceptor recombination-type light emission which utilizes a donor level and an acceptor level, and localized emission which utilizes inner-shell electron transition of a metal ion.

Although the inorganic light-emitting element has more excellent material reliability than the organic light-emitting element, sufficient emission luminance and the like have not been obtained and various researches have been carried out (for example, see Reference 1: Japanese Published Patent Application No. 2005-336275).

Further, the inorganic light-emitting element has an emission mechanism in which light emission is obtained by collision excitation of electrons, which have been accelerated by a high electric field, against a luminescent center material; therefore, a voltage of several hundred V is needed to be applied to the light-emitting element. However, in order to apply the inorganic light-emitting element to a display panel or the like, it is an important object to provide a light-emitting element with low driving voltage and high luminance.

Reference 1 discloses a method for manufacturing a light-emitting material. In the method, Mn is added to ZnS:CuCl obtained by mixing Cu as an activating agent into ZnS used as a base material, and then the mixture is baked at 1250°C; and GaAs is added to the baked product and baked at 650°C. According to the above manufacturing method of Reference 1, a light-emitting material in which Mn and Ga are mixed in solid states with ZnS of the base material and Mn serves as a luminescent center can be obtained. However, it is difficult to obtain favorable luminance characteristics in the thus manufactured light-emitting material.

### SUMMARY OF THE INVENTION

In view of the aforementioned problems, it is an object of the present invention to provide a novel light-emitting material and a method for manufacturing the light-emitting material. It is another object to provide a light-emitting element capable of low-voltage driving. It is still another object-to provide a light-emitting device and an electronic device with reduced power consumption. It is yet another object to provide a light-emitting device and an electronic device which can be manufactured at low cost.

An aspect of the present invention is a light-emitting material including: a compound which includes at least manganese and gallium, manufactured by mixing gallium arsenide, gallium phosphide, or gallium antimonide with manganese and then baking them; a base material; and an element to be a luminescent center.

An aspect of the present invention is a light-emitting material manufactured by mixing a first baked product and a second baked product and then baking them. The first baked product is obtained by mixing gallium arsenide, gallium phosphide, or gallium antimonide with manganese and then baking the mixture. The second baked product is obtained by mixing a base material with an element for forming a luminescent center material or a compound including the element and then baking the mixture.

Another aspect of the present invention is a light-emitting material including at least one of manganese gallium and manganese gallium phosphide, a base material, and an element to be a luminescent center.

An aspect of the present invention is a light-emitting element including a light-emitting layer between a pair of electrodes, and the light-emitting layer is formed using a light-emitting material that includes: a base material; an element to be a luminescent center; and a compound including at least manganese and gallium. Further, the compound including at least manganese and gallium is a compound in which gallium arsenide, gallium phosphide, or gallium antimonide is mixed with manganese and then baked.

An aspect of the present invention is a method for manufacturing a light-emitting material including the steps of: mixing gallium arsenide, gallium phosphide, or gallium antimonide with manganese and then performing first baking; mixing a base material with an element for forming a luminescent center material or a compound including the element and then performing second baking; mixing the first baked product with the second baked product and then performing third baking.

In the above aspect of a method for manufacturing a light-emitting material of the present invention, the first baking is performed at from 700 to 1500°C.

In the above aspect of a method for manufacturing a light-emitting material of the present invention, the second baking is performed at from 700 to 1500°C.

In the above aspect of a method for manufacturing a light-emitting material of the present invention, the third baking is performed at a lower temperature than the first baking and the second baking.

A light-emitting material of the present invention which includes a compound including at least gallium and manganese can be a light-emitting material with high luminance.

The light-emitting material of the present invention has high electric conductivity and low resistance. Therefore, a light-emitting element using the light-emitting material of the present invention is capable of low voltage driving.

Since a light-emitting device of the present invention includes a light-emitting element capable of low voltage driving, its power consumption can be reduced. Further, a driver circuit with high withstand voltage is not required, and accordingly, a light-emitting device can be manufactured at low cost.

### BRIEF DESCRIPTION OF THE DRAWINGS

FIG 1 is a diagram illustrating a light-emitting element of the present invention.
FIGS. 2A to 2C are diagrams each illustrating a light-emitting element of the present invention.
FIG 3 is a diagram illustrating a light-emitting device of the present invention.
FIG 4A is a top view illustrating a light-emitting device of the present invention, and FIG 4B is a cross-sectional view thereof.
FIGS. 5A to 5D are diagrams each illustrating an electronic device of the present invention.
FIG 6 is a diagram illustrating an electronic device of the present invention.
FIG 7 is a graph showing voltage-luminance characteristics of a dispersion-type EL element.
FIG 8 is a graph showing frequency-luminance characteristics of a dispersion-type EL element.
FIG 9 is a graph showing a measurement result by XRD of a Mn-GaP compound (650°C).
FIG 10 is a graph showing a measurement result by XRD of a Mn-GaP compound (1250°C).
FIG 11 is a graph showing a measurement result by XRD of a Mn-GaP compound (1400°C).
FIG 12 is a graph showing voltage-luminance characteristics of a dispersion-type EL element.
FIG 13 is a graph showing frequency-luminance characteristics of a dispersion-type EL element.

### DETAILED DESCRIPTION OF THE INVENTION

Hereinafter, embodiment modes of the present invention will be described in detail with reference to the accompanying drawings. Note that the present invention is not limited to the description below, and it is easily understood by those skilled in the art that modes and details can be modified in various ways without departing from the purpose and the scope of the present invention. Accordingly, the present invention should not be interpreted as being limited to the description of the embodiment modes below.

### (Embodiment Mode 1)

This embodiment mode will describe a light-emitting material for manufacturing a light-emitting element with high luminance. Note that the light-emitting material of this embodiment mode is a material that includes a base material, an element to be a luminescent center, and a compound including at least gallium and manganese.

As a base material used for the light-emitting material, sulfide, oxide, or nitride can be used. As sulfide, zinc sulfide, cadmium sulfide, calcium sulfide, yttrium sulfide, gallium sulfide, strontium sulfide, barium sulfide, or the like can be used, for example. As oxide, for example, zinc oxide, yttrium oxide, or the like can be used. As nitride, for example, aluminum nitride, gallium nitride, indium nitride, or the like can be used. Further, zinc selenide, zinc telluride, or the like, or ternary mixed crystals such as calcium gallium sulfide, strontium gallium sulfide, or barium gallium sulfide may be used.

As a luminescent center material included in the light-emitting material, one or more of manganese, copper, samarium, terbium, erbium, thulium, europium, cerium, praseodymium, and the like can be used, for example, as a luminescent center material for localized light emission. Note that a halogen element such as fluorine, chlorine, bromine, or iodine, or silver, which serves as charge compensation may be added thereto. On the other hand, a luminescent center material for donor-acceptor recombination-type light emission is formed using a first impurity element that forms a donor level and a second impurity element that forms an acceptor level. As the first impurity element, for example, fluorine, chlorine, aluminum, or the like can be used. As the second impurity element, for example, copper, silver, or the like can be used. Note that there may be a case where a lattice defect or the like forms a donor level, and thus, the first impurity element is not necessarily used.

As a synthesis method of the light-emitting material, various methods such as a solid-phase method or a liquid-phase method (for example, a coprecipitation method) can be used. In addition, a method employing a pyrolytic reaction of a precursor, a spray pyrolysis method, a double decomposition method, a reverse micelle method, or a method in which one or more of the above methods and high-temperature baking are combined can be used. Alternatively, a liquid phase method such as a freeze-drying method can be used.

The solid-phase method is a method in which synthesis is conducted by a solid phase reaction. In the solid-phase method, a base material and an element to be included in the base material or a compound including the element are weighed, mixed in a mortar, and then heated and baked using an electric furnace. The baking temperature is preferably from 700 to 1500°C. This is because the solid phase reaction does not progress when the temperature is much lower than 700°C, while the base material decomposes when the temperature is much higher than 1500°C. Baking may be conducted with the mixture in powder form; however, it is preferable to conduct baking with the mixture in pellet form. Unlike other methods such as a liquid-phase method, the solid-phase method needs baking to be conducted at a relatively high temperature. However, this method is simple, and therefore gives high productivity and is suitable for mass production.

In a liquid-phase method (a coprecipitation method), a base material or a compound including the base material and an element to be included in the base material or a compound including the element are reacted with each other in a solution, dried, and then baked. In the liquid-phase method, particles of the light-emitting material, each of which has a small diameter, are uniformly dispersed in the base material. Therefore, the synthesis reaction can progress at a lower baking temperature than that of the solid-phase method.

Here, an example is described in which a light-emitting material of the present invention is formed using a luminescent center material for donor-acceptor recombination-type light emission as a luminescent center material by a solid-phase method.

First, a compound including at least gallium and manganese is formed. Weighed gallium arsenide, gallium phosphide, or gallium antimonide is mixed with manganese and then heated and baked at higher temperature using an electric furnace, so that the compound including at least gallium and manganese can be formed. The baking temperature is preferably from 700 to 1500°C, more preferably, from 1250 to 1400°C. When concentration of gallium arsenide, gallium phosphide, or gallium antimonide is higher than that of manganese in baking, a baked product is hardened, and it is difficult to collect the baked product in powder forms. Thus, it is necessary to carry out mixing in such a condition that manganese is included at higher concentration than gallium arsenide, gallium phosphide, or gallium antimonide in the mixture. For example, mixing is preferably carried out at a ratio of manganese to gallium arsenide, gallium phosphide, or gallium antimonide is 1:0.3 (at molar ratio).

Through the above-described baking, a by-product such as manganese oxide may be mixed in a baked product (a first baked product). Here, since a compound including at least gallium and manganese is an alloy having magnetism at the room temperature, it is preferable to separate the baked product using a magnet at the room temperature so as to select the first baked product.

Next, a base material and an element for forming a luminescent center material or a compound including the element are weighted and mixed with each other in a mortar. Then, the mixed material is heated and baked using an electric furnace, so that a second baked product is manufactured. As the base material, the above-described base material can be used. For a luminescent center material for donor-acceptor recombination-type light emission, fluorine, chlorine, aluminum sulfide or the like can be used as a first impurity element or a compound including the first impurity element, and copper, silver, copper sulfide, silver sulfide, or the like can be used as a second impurity element or a compound including the second impurity element. The baking temperature is preferably from 700 to 1500°C. Further, baking may be performed in a sealed evacuated tube. Furthermore, baking may be conducted while supplying a gas containing an element for forming the base material. When ZnS is used as the base material, for example, a hydrogen sulfide gas is preferably used. Note that baking is preferably conducted with the materials in pellet form, rather than in powder form.

Further, when a solid-phase reaction is employed, a compound including the first impurity element and the second impurity element may also be used. In that case, the impurity elements can be easily diffused and the solid-phase reaction can smoothly progress; therefore, a light-emitting material in which the impurity elements are uniformly diffused can be obtained. Furthermore, since an excessive impurity element is not mixed in the light-emitting material, a high-purity light-emitting material can be obtained. As the compound including the first impurity element and the second impurity element, for example, copper fluoride, copper chloride, copper iodide, copper bromide, copper nitride, copper phosphide, silver fluoride, silver chloride, silver iodide, silver bromide, gold chloride, gold bromide, or the like can be used.

Note that the concentration of these impurity elements may be from 0.01 to 10 atomic%, and is preferably from 0.05 to 5 atomic% with respect to the base material.

Further, the base material is baked in advance, the element for forming the luminescent center material or the compound including the element is mixed with the base material, and then the mixture may be baked again. In the case of baking the base material in advance, flux may be mixed in order to improve crystallinity of the base material or to produce a single crystal. As for flux, a halogen compound is often used. A halogen compound is formed from a halogen element (Group 17 of the periodic table) of a transition metal or a rare-earth metal, that is, fluorine, chloride, bromine, iodine, or astatine. For example, magnesium chloride, potassium chloride, lead chloride, sodium chloride, zinc chloride, barium chloride, ammonium chloride, sodium iodide, potassium iodide, barium bromide, copper(I) chlorine, copper(II) chlorine, or the like can be used.

Next, the first baked product is mixed with the second baked product. Here, the first baked product has a compound including at least gallium and manganese. Then, third baking is conducted by heating the baked product using an electric furnace. The baking temperature is lower than those of the first and second baking. For example, the baking temperature is preferably from 650 to 800°C. This is because the compound including at least manganese and gallium decomposes and manganese diffuses in the base material if the third baking is conducted at high temperature. Note that the concentration of the compound including at least gallium and manganese is preferably set about 0.0025 to 0.005 mol with respect to the base material whose molar concentration is 1.

The thus obtained light-emitting material has high electric conductivity and low resistance.

Note that this embodiment mode can be combined with other embodiment modes as appropriate.

### (Embodiment Mode 2)

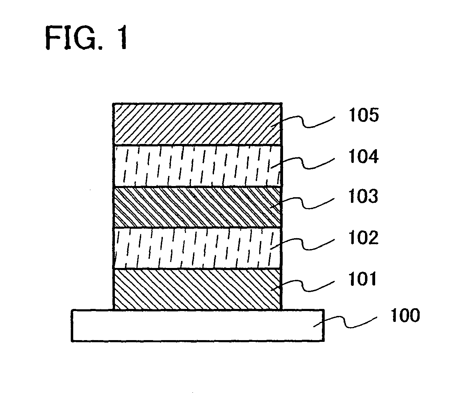

This embodiment mode will describe a light-emitting element formed using the material described in Embodiment Mode 1, with reference to FIG 1. Note that in this embodiment mode, a thin-film light-emitting element is described.

A light-emitting element described in this embodiment mode has a structure
where, as shown in FIG 1, a first electrode 101 and a second electrode 105 are provided over a substrate 100, a light-emitting layer 103 is provided between the first electrode 101 and the second electrode 105, a first dielectric layer 102 is provided between the first electrode 101 and the light-emitting layer 103, and a second dielectric layer 104 is provided between the light-emitting layer 103 and the second electrode 105. Note that the structure of the light-emitting element is not limited to the one shown in FIG 1, and a structure having only one of the first dielectric layer 102 and the second dielectric layer 104 may be employed. In this embodiment mode, description will be made below on the assumption that the first electrode 101 functions as an anode and the second electrode 105 functions as a cathode.

The substrate 100 is used as a support of the light-emitting element. For the substrate 100, glass, quartz, plastic, or the like can be used, for example. Note that as long as the substrate serves as a support for the light-emitting element in the manufacturing process, materials other than these can be used for the substrate.

The first electrode 101 and the second electrode 105 can be formed using metal, an alloy, a conductive compound, a mixture thereof, or the like. Specifically, conductive metal oxide such as indium tin oxide (ITO), ITO containing silicon or silicon oxide, indium zinc oxide (IZO), indium oxide containing tungsten oxide and zinc oxide (IWZO), and the like can be given as examples.

A film of such conductive metal oxide is generally deposited by sputtering. For example, a film of indium zinc oxide (IZO) can be formed by sputtering using a target in which 1 to 20 wt% of zinc oxide is added into indium oxide. In addition, a film of indium oxide containing tungsten oxide and zinc oxide (IWZO) can be formed by sputtering using a target in which 0.5 to 5 wt% of tungsten oxide and 0.1 to 1 wt% of zinc oxide are mixed with indium oxide. Alternatively, the first electrode 101 and the second electrode 105 can be formed using a material such as aluminum, silver, gold, platinum, nickel, tungsten, chromium, molybdenum, iron, cobalt, copper, palladium, or nitride of a metal material (e.g., titanium nitride).

Note that in the case of forming the first electrode 101 or the second electrode 105 as a light-transmitting electrode, the light-transmitting electrode can be formed by depositing a material to have a thickness of 1 to 50 nm, or preferably 5 to 20 nm even when the material has low transmittance of visible light. Further, the electrode can be formed by vacuum evaporation, CVD, or a sol-gel method other than sputtering.

However, since light emission is extracted outside through the first electrode 101 or the second electrode 105, at least one of the first electrode 101 and the second electrode 105 is needed to be formed of a material with a light-transmitting property. In addition, it is preferable to select materials so that the first electrode 101 has a higher work function than the second electrode 105.

The light-emitting layer 103 can be formed using the light-emitting material which includes the base material, the element to be a luminescent center, and the compound including at least gallium and manganese described in Embodiment Mode 1.

As a material for forming the first and second dielectric layers 102 and 104, inorganic materials such as oxide are used. For example, barium titanate, tantalum pentoxide, or the like, which has a high dielectric constant, can be used.

As a method for forming the light-emitting layer 103, the first dielectric layer 102, and the second dielectric layer 104, the following can be used: a vacuum evaporation method such as resistance-heating evaporation or electron-beam evaporation (EB evaporation), a physical vapor deposition (PVD) method such as sputtering, a chemical vapor deposition (CVD) method such as metal organic CVD or low-pressure hydride transport CVD, an atomic layer epitaxy (ALE) method, or the like. Moreover, an ink jet method, a spin coating method, or the like can be used. Each thickness of the light-emitting layer 103, the first dielectric layer 102, and the second dielectric layer 104 is not specifically limited, but is preferably in the range of from 10 to 1000 nm.

A layer in which a compound including at least gallium and manganese is deposited may be formed between the light-emitting layer 103 and the first dielectric layer 102 or between the light-emitting layer 103 and the second dielectric layer 104. Alternatively, the layers in which a compound including at least gallium and manganese is deposited may be formed between the light-emitting layer 103 and the first dielectric layer 102 and between the light-emitting layer 103 and the second dielectric layer 104.

The light-emitting element of the present invention can have high luminance because a light-emitting material including a base material, an element to be a luminescent center, and a compound including at least gallium and manganese is used for a light-emitting layer of the light-emitting element. In addition, the light-emitting element of the present invention can operate with low driving voltage; therefore, power consumption thereof can be reduced.

### (Embodiment Mode 3)

This embodiment mode will describe a structure of a dispersion-type light-emitting element formed using the material described in Embodiment Mode 1.

In the case of a dispersion-type light-emitting element, a film-form light-emitting layer is formed by dispersing particles of a light-emitting material into a binder. When particles with a desired size cannot be obtained depending on a method for forming a light-emitting material, the material may be processed into particulate forms by being ground in a mortar or the like. A binder is a substance for fixing particles of the light-emitting material in a dispersed state and holding the light-emitting material in a shape as a light-emitting layer. The particles of the light-emitting material are uniformly dispersed and fixed in the light-emitting layer with the binder.

In the case of a dispersion-type light-emitting element, a light-emitting layer can be formed by a droplet discharge method by which a light-emitting layer can be selectively formed, a printing method (e.g., screen printing or offset printing), a coating method such as spin coating, a dipping method, a dispenser method, or the like. The thickness is not particularly limited, but is preferably in a range of from 10 to 1000 nm. Further, in the light-emitting layer including the light-emitting material and the binder, the proportion of the light-emitting material is preferably greater than or equal to 50 wt% and less than or equal to 80 wt%.

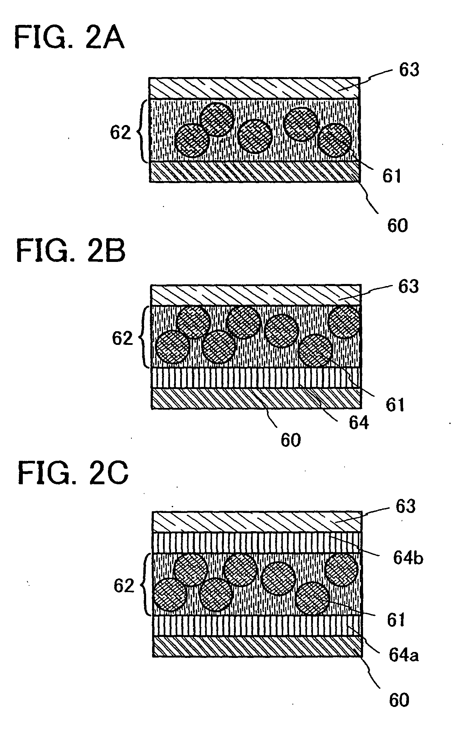

FIGS. 2A to 2C show examples of a dispersion-type light-emitting element which can be used as the light-emitting element. A light-emitting element shown in FIG. 2A has a stacked structure of a first electrode 60, a light-emitting layer 62, and a second electrode 63. The light-emitting layer 62 includes a light-emitting material 61 which is held with a binder. Note that in this embodiment mode, a material similar to that shown in Embodiment Mode 1 can be used as the light-emitting material 61. In addition, the first electrode 60 and the second electrode 63 can be formed using the material similar to that shown in Embodiment Mode 2 and by the method similar thereto.

A binder that can be used for the dispersion-type light-emitting element of this embodiment mode can be formed using an organic insulating material or an inorganic insulating material. Alternatively, the binder may be formed using a mixed material of an organic insulating material and an inorganic insulating material. As an organic insulating material, polymer with a relatively high dielectric constant, such as a cyanoethyl cellulose-based resin, or polyethylene, polypropylene, a polystyrene-based resin, a silicone resin, an epoxy resin, or a vinylidene fluoride resin can be used. Alternatively, a heat-resistant high molecule such as aromatic polyamide or polybenzoimidazole, or a siloxane resin may be used. The siloxane resin corresponds to a resin including a Si-O-Si bond. Siloxane has a skeleton structure in which silicon (Si) and oxygen (O) are bonded. As a substituent of siloxane, an organic group including at least hydrogen (e.g., an alkyl group or aromatic hydrocarbon) is used. Further, an organic group may include a fluoro group. Alternatively, a resin material such as a vinyl resin of polyvinyl alcohol, polyvinyl butyral, or the like; a phenol resin; a novolac resin; an acrylic resin; a melamine resin; a urethane resin; or an oxazole resin (polybenzoxazole) may also be used as the organic insulating material. An oxazole resin such as a photo-curing polybenzoxazole resin can also be used. In addition, fine particles with a high dielectric constant, such as particles of barium titanate or strontium titanate, can be mixed with these resins to adjust the dielectric constant as appropriate.

An inorganic insulating material included in the binder can be formed using silicon oxide, silicon nitride, silicon containing oxygen and nitrogen, aluminum nitride, aluminum containing oxygen and nitrogen, aluminum oxide, titanium oxide, barium titanate, strontium titanate, lead titanate, potassium niobate, lead niobate, tantalum oxide, barium tantalate, lithium tantalate, yttrium oxide, zirconium oxide, zinc sulfide, or a substance including an inorganic insulating material other than the aforementioned. When an inorganic insulating material with high dielectric constant is mixed with an organic insulating material (by addition or the like), the dielectric constant of an electroluminescent layer including the light-emitting material and the binder can be further controlled and increased.

Through the manufacturing process of the dispersion-type light-emitting element of this embodiment mode, the light-emitting material is dispersed in a solution containing the binder. As a solvent for the solution containing the binder which can be used in this embodiment mode, a solvent may be selected as appropriate such that the solvent can dissolve a binder material and can make a solution having a viscosity suitable for a method for forming an electroluminescent layer (various wet processes) and for a desired film thickness. An organic solvent or the like can be used. For example, when a siloxane resin is used as a binder, propylene glycolmonomethyl ether, propylene glycolmonomethyl ether acetate (also referred to as PGMEA), 3-methoxy-3-methyl-1-butanol (also referred to as MMB), or the like can be used.

The light-emitting elements shown in FIGS. 2B and 2C each have a structure where the light-emitting element of FIG. 2A is provided with a dielectric layer between the electrode and the light-emitting layer. The light-emitting element shown in FIG 2B has a dielectric layer 64 between the first electrode 60 and the light-emitting layer 62, while the light-emitting element shown in FIG 2C has a dielectric layer 64a between the first electrode 60 and the light-emitting layer 62, and a dielectric layer 64b between the second electrode 63 and the light-emitting layer 62. In this manner, the dielectric layer may be provided between one of the electrodes and the light-emitting layer, or the dielectric layers may be provided between each of the electrodes and the light-emitting layer. Furthermore, the dielectric layer may have either a single layer or a stacked layer of a plurality of layers.

Although the dielectric layer 64 is provided in contact with the first electrode 60 in FIG 2B, the stacking order of the dielectric layer and the light-emitting layer may be reversed so that the dielectric layer 64 is in contact with the second electrode 63.

Although each dielectric layer shown in FIGS. 2A to 2C is not specifically limited, it is preferably a film having a high withstand voltage, dense film quality, and a high dielectric constant. For example, as a dielectric layer, either a mixed film of any of the following or a film of two or more stacked films of any of the following can be used: silicon oxide, yttrium oxide, titanium oxide, aluminum oxide, hafnium oxide, tantalum oxide, barium titanate, strontium titanate, lead titanate, silicon nitride, and zirconium oxide. A dielectric layer using such materials can be deposited by sputtering, evaporation, CVD, or the like. Alternatively, the dielectric layer may be formed by dispersing particles of the above insulating material into a binder. A binder material may be formed of the material that is similar to that of a binder contained in the light-emitting layer and formed by the method that is similar thereto. In addition, although the thickness of the dielectric layer is not specifically limited, it is preferably in the range of from 10 to 1000 nm.

In the light-emitting element shown in this embodiment mode, light emission can be obtained by applying voltage between a pair of electrodes sandwiching an electroluminescent layer. Further, the light-emitting element of this embodiment mode can operate by either direct-current driving or alternate-current driving.

The light-emitting element of the present invention can have high luminance because a light-emitting material including a base material, an element to be a luminescent center, and a compound including at least gallium and manganese is used for a light-emitting layer of the light-emitting element. In addition, the light-emitting element of the present invention can operate with low driving voltage; therefore, power consumption thereof can be reduced.

### (Embodiment Mode 4)

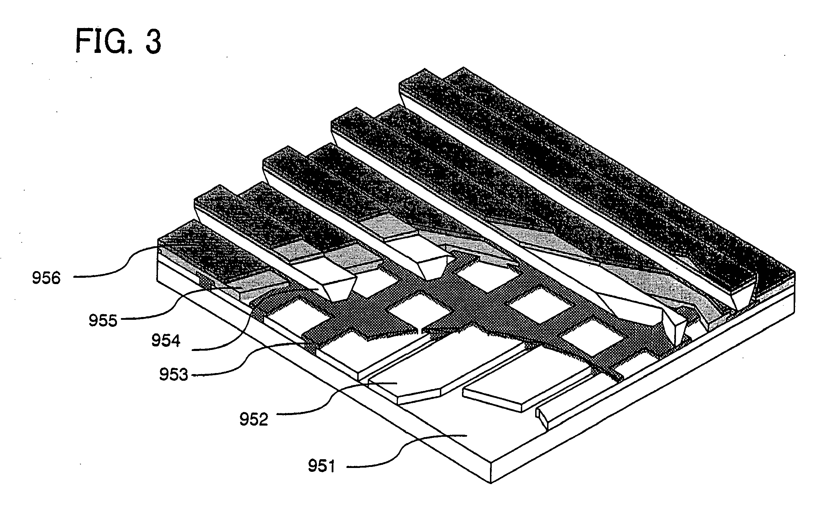

This embodiment mode will describe a light-emitting device that has the light-emitting element of the present invention, with reference to FIG 3.

A light-emitting device described in this embodiment mode is a passive matrix light-emitting device in which a light-emitting element is driven without providing a driving element such as a transistor over the same substrate with the light-emitting element. A perspective view of a passive-matrix light-emitting device manufactured to which the present invention is applied is shown in FIG. 3.

In FIG 3, an electrode 952 and an electrode 956 are provided over a substrate 951, and a light-emitting layer 955 is provided between the electrode 952 and the electrode 956. Note that the light-emitting layer 955 is formed using the light-emitting material described in Embodiment Mode 1.

Side edges of the electrode 952 are covered with an insulating layer 953. A partition layer 954 is provided over the insulating layer 953. Sidewalls of the partition layer 954 are slanted so that a distance between one of the sidewalls and the other becomes narrower toward a substrate surface. In other words, a cross section of the partition layer 954 in the direction of a narrow side is trapezoidal, and a base (a side facing in the same direction as the plane direction of the insulating layer 953 and in contact with the insulating layer 953) is shorter than an upper side (a side facing in the same direction as the plane direction of the insulating layer 953 and not in contact with the insulating layer 953). The partition layer 954 is provided in such a manner, whereby defects of a light-emitting element due to static electricity or the like can be prevented. In the passive matrix light-emitting device also, low-power-consumption drive can be achieved by providing the light-emitting element of the present invention which can operate with low driving voltage.

Furthermore, since the light-emitting device of the present invention does not need a driver circuit with high withstand voltage, the light-emitting device can be manufactured at low cost. Moreover, weight reduction in the light-emitting device and size reduction in a driver circuit portion are possible.

In this embodiment mode, a light-emitting material including a base material, an element to be a luminescent center, and a compound including at least gallium and manganese is used for the light-emitting layer; therefore, a light-emitting device with high luminance can be obtained.

### (Embodiment Mode 5)

This embodiment mode will describe a light-emitting device that has the light-emitting element of the present invention.

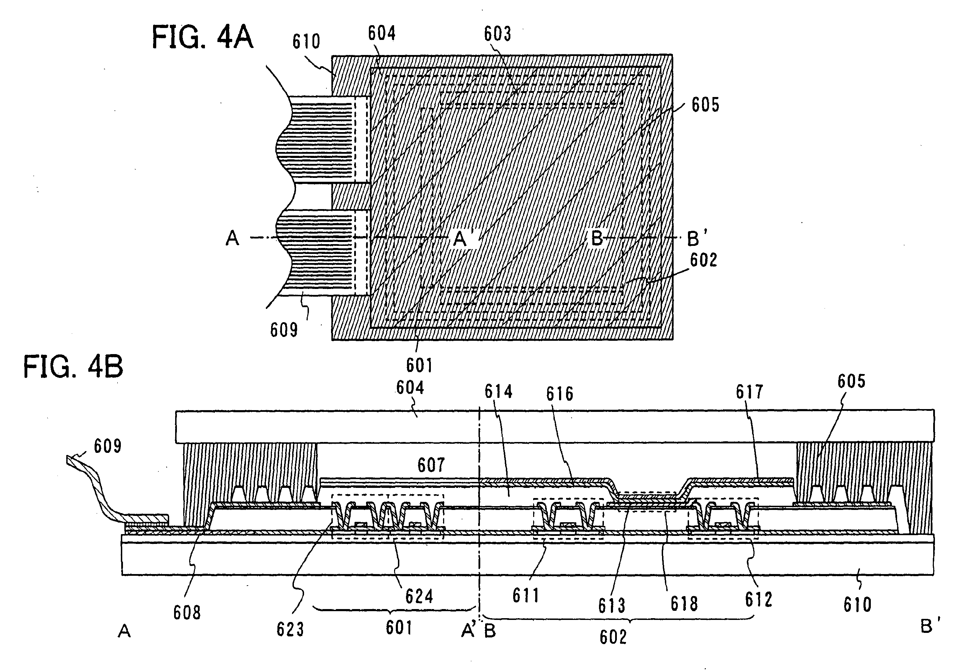

This embodiment mode will describe an active-matrix light-emitting device in which driving of the light-emitting element is controlled by a transistor. This embodiment mode will describe a light-emitting device that has a light-emitting element of the present invention in a pixel portion, with reference to FIGS. 4A and 4B. FIG 4A is a top view of the light-emitting device, while FIG 4B is a cross-sectional view along a line A-A' and a line B-B' in FIG 4A. In portions indicated by dashed lines in FIG 4A, reference numeral 601 denotes a driver circuit portion (a source driver circuit), 602 denotes a pixel portion, and 603 denotes a driver circuit portion (a gate driver circuit). Also, a reference numeral 604 denotes a sealing substrate, 605 denotes a sealant, and the inside that is surrounded by the sealant 605 is a space 607.

Note that a lead wiring 608 in FIG 4B is a wiring for transmitting signals to be input to the source driver circuit 601 and the gate driver circuit 603. The lead wiring 608 receives video signals, clock signals, start signals, reset signals, and the like from an FPC (Flexible Printed Circuit) 609 which serves as an external input terminal. Note that although only the FPC is shown here, a printed wiring board (PWB) may be attached to the FPC. The light-emitting device in this specification includes not only the light-emitting device body itself but also a state in which an FPC or a PWB is attached thereto.

Next, a cross-sectional structure is described with reference to FIG 4B. The driver circuit portion and the pixel portion are formed over an element substrate 610. Here, the source driver circuit 601 that is the driver circuit portion and one pixel in the pixel portion 602 are shown.

A CMOS circuit in which an n-channel TFT 623 and a p-channel TFT 624 are combined is formed as the source driving circuit 601. A TFT forming the driver circuit may be a known CMOS circuit, PMOS circuit, or NMOS circuit. A driver integration structure in which a driver circuit is formed' over a substrate is described in this embodiment mode, but a driver circuit is not necessarily provided in such a structure and a driver circuit can be formed not over a substrate but outside a substrate.

The pixel portion 602 has a plurality of pixels, each of which includes a switching TFT 611, a current control TFT 612, and a first electrode 613 that is electrically connected to a drain of the current control TFT 612. Note that an insulating film 614 is formed to cover an end portion of the first electrode 613. Here, the insulating film 614 is formed using a positive photosensitive acrylic resin film.

In order to obtain an excellent coverage, the insulating film 614 is formed to have a curved surface with a curvature at its top end or bottom end. For example, in the case of using positive photosensitive acrylic as a material of the insulating film 614, it is preferable to form only the top end of the insulating film 614 to have a curvature radius (0.2 to 3 µm). Further, as the insulating film 614, either a negative material, which becomes insoluble in etchant when irradiated with light, or a positive material, which becomes soluble in etchant when irradiated with light, can be used.

Over the first electrode 613, a layer 616 including a light-emitting element using the light-emitting material described in Embodiment Mode 1, and a second electrode 617 are formed in sequence. At least one of the first electrode 613 and the second electrode 617 has a light-transmitting property; thus, light emitted from the layer 616 including a light-emitting element can be extracted to the outside.

The first electrode 613, the layer 616 including a light-emitting element, and the second electrode 617 can be formed by various methods. Specifically, a vacuum evaporation method such as a resistance heating evaporation method or an electron beam evaporation (EB evaporation) method, a physical vapor deposition method (PVD) such as a sputtering method, a chemical vapor deposition method (CVD) such as an organic metal CVD method or a hydride transfer low pressure CVD method, an atomic layer epitaxy method (ALE), or the like. Moreover, an ink jet method, a spin coating method, or the like can be used. In addition, different methods may be separately used to form the electrodes or layers.

By attachment of the sealing substrate 604 to the element substrate 610 with the sealant 605, a light-emitting element 618 is provided in the space 607 surrounded by the element substrate 610, the sealing substrate 604, and the sealant 605. Note that the space 607 is filled with a filler. There are cases where the space 607 may be filled with an inert gas (such as nitrogen or argon) as such a filler, or where the space 607 may be filled with the sealant 605.

Note that an epoxy-based resin is preferably used as the sealant 605. It is desirable that materials which allow as little moisture and oxygen as possible to penetrate be used as the sealant and the filler. As the sealing substrate 604, a plastic substrate formed of FRP (Fiberglass-Reinforced Plastics), PVF (polyvinyl fluoride), a polyester film, polyester, acrylic, or the like can be used besides a glass substrate or a quartz substrate.

In the above manner, the light-emitting device that has the light-emitting element of the present invention can be obtained.

The light-emitting device of the present invention can operate at low driving voltage because it has a light-emitting element formed using the light-emitting material which includes a base material, an element to be a luminescent center, and a compound including at least gallium and manganese described in Embodiment Mode 1. In addition, high emission efficiency can be achieved. Thus, a light-emitting device with high luminance and reduced power consumption can be obtained.

Furthermore, since the light-emitting device of the present invention does not need a driver circuit with high withstand voltage, the light-emitting device can be manufactured at low cost. Moreover, weight reduction in the light-emitting device and size reduction in a driver circuit portion are possible.

### (Embodiment Mode 6)

This embodiment mode will describe electronic devices of the present invention which includes the light-emitting device described in Embodiment Mode 4 or 5 in part thereof. The electronic device of the present invention includes a light-emitting element formed using the light-emitting material described in Embodiment Mode 1. With such light-emitting elements having reduced driving voltage and high luminance, electronic devices having reduced power consumption and high luminance can be provided.

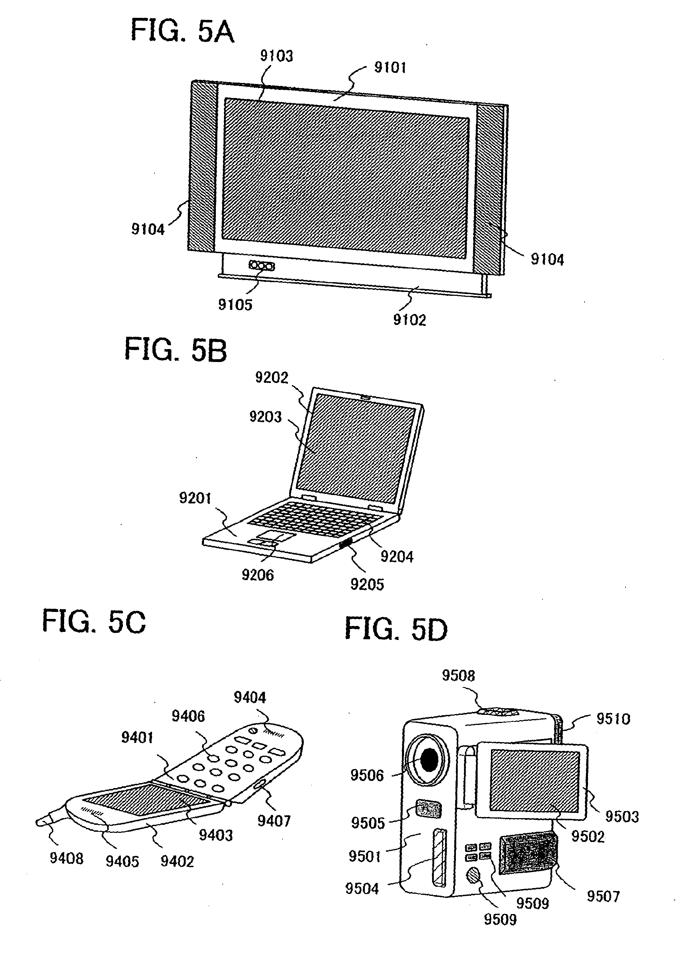

As electronic devices to which the present invention is applied, the following are given: a camera such as a video camera or a digital camera, a goggle type display, a navigation system, an audio-reproducing device (e.g., a car audio or an audio component), a computer, a game machine, a portable information terminal (e.g., a mobile computer, a mobile phone, a mobile game machine, or an electronic book), an image-reproducing device having a recording medium (specifically, a device for reproducing a content of a recording medium such as a digital versatile disc (DVD) and having a display for displaying a reproduced image), and the like. Specific examples of these electronic devices are shown in FIGS. 5A to 5D.

FIG 5A illustrates a television set of the present invention, which includes a chassis 9101, a support 9102, a display portion 9103, speaker portions 9104, a video input terminal 9105, and the like. In this television set, the display portion 9103 has a matrix arrangement of light-emitting elements which are formed using the light-emitting material described in Embodiment Mode 1. The light-emitting element has advantages of high emission efficiency and low driving voltage. Moreover, short-circuiting by an external impact or the like can also be prevented. The display portion 9103 including such light-emitting elements has the similar advantages. Therefore, in television set, image quality hardly deteriorates and low power consumption is achieved. With such advantages, deterioration compensation functions and power supply circuits can be significantly reduced or downsized in the television set; therefore, reduction in the size and weight of the chassis 9101 and the support 9102 can be achieved. Since the television set of the present invention can achieve low power consumption, high image quality, and a small size and lightweight, products suitable for living environment can be provided.

FIG 5B illustrates a computer of the present invention, which includes a main body 9201, a chassis 9202, a display portion 9203, a keyboard 9204, an external connection port 9205, a pointing device 9206, and the like. In this computer, the display portion 9203 has a matrix arrangement of light-emitting elements which are formed using the light-emitting material described in Embodiment Mode 1. The light-emitting element has advantages of high emission efficiency and low driving voltage. Moreover, short-circuiting by an external impact or the like can also be prevented. The display portion 9203 which includes such light-emitting elements has the similar advantages. Therefore, in this computer, image quality hardly deteriorates and low power consumption is achieved. With such advantages, deterioration compensating functions and power supply circuits can be significantly reduced or downsized in this computer; therefore, reduction in the size and weight of the main body 9201 and the chassis 9202 can be achieved. Since the computer of the present invention can achieve low power consumption, high image quality, and reduction in size and weight, products suitable for living environment can be provided. In addition, the computer can be portable, and a portable computer with a display portion which can withstand impact from outside when being carried can be provided.

FIG. 5C illustrates a mobile phone of the present invention, which includes a main body 9401, a chassis 9402, a display portion 9403, an audio input portion 9404, an audio output portion 9405, operation keys 9406, an external connection port 9407, an antenna 9408, and the like. In this mobile phone, the display portion 9403 has a matrix arrangement of light-emitting elements which are formed using the light-emitting material described in Embodiment Mode 1. The light-emitting element has advantages of high emission efficiency and low driving voltage. Moreover, short-circuiting by an external impact or the like can also be prevented. The display portion 9403 which includes the light-emitting elements has the similar advantages. Therefore, in the mobile phone, image quality hardly deteriorates and lower power consumption is achieved. With such advantages, in the portable phone, deterioration compensating functions and power supply circuits can be significantly reduced or downsized; therefore, reduction in the size and weight of the main body 9401 and the chassis 9402 can be achieved. Since the mobile phone of the present invention can achieve low power consumption, high image quality, and reduction in size and weight, products suitable for portable use can be provided. In addition, a product with a display portion which can withstand impact when being carried can be provided.

FIG 5D illustrates a camera of the present invention, which includes a main body 9501, a display portion 9502, a chassis 9503, an external connection port 9504, a remote control receiving portion 9505, an image receiving portion 9506, a battery 9507, an audio input portion 9508, an operation key 9509, an eye piece portion 9510, and the like. In this camera, the display portion 9502 has a matrix arrangement of light-emitting elements which are formed using the light-emitting material described in Embodiment Mode 1. The light emitting element has advantages of high emission efficiency and low driving voltage. Moreover, short-circuiting by an external impact or the like can also be prevented. The display portion 9502 including such light-emitting elements has the similar advantages. Therefore, image quality hardly deteriorates and low power consumption is achieved in this camera. With such advantages, in the camera, deterioration compensating functions and power supply circuits can be significantly reduced or downsized; therefore, reduction in the size and weight of the main body 9501 can be achieved. Since the camera of the present invention can achieve low power consumption, high image quality, and reduction in size and weight, products suitable for portable use can be provided. In addition, a product with a display portion which can withstand impact when being carried can be provided.

As described above, the applicable range of the light-emitting device of the present invention is so wide that the light-emitting device can be applied to electronic devices in various fields. With use of the light-emitting device of the present invention, an electronic device having a display portion with low power consumption, high luminance, and high reliability can be provided.

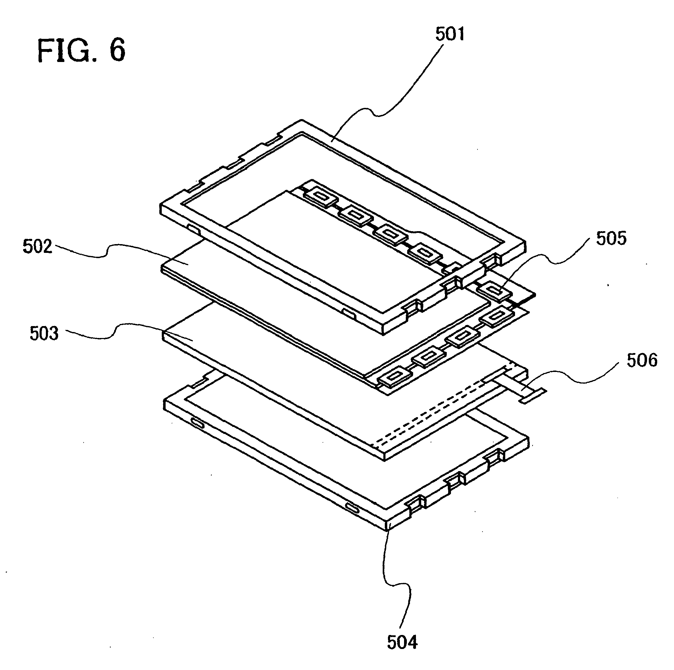

The light-emitting device of the present invention has a light-emitting element with high emission efficiency, and can also be used as a lighting system. A mode in which a light-emitting element of the present invention is used for a lighting system is described with reference to FIG 6.

FIG 6 illustrates an example of a liquid crystal display device using the light-emitting device of the present invention as a backlight. The liquid crystal display device illustrated in FIG. 6 includes a chassis 501, a liquid crystal layer 502, a backlight 503, and a chassis 504, and the liquid crystal layer 502 is connected to a driver IC 505. The light-emitting device of the present invention is used as the backlight 503, to which current is supplied through a terminal 506.

With use of the light-emitting device of the present invention as a backlight of the liquid crystal display device, a backlight with reduced power consumption and high luminance can be obtained. Moreover, since the light-emitting device of the present invention is a lighting system of surface light emission type and can have a larger area, the backlight can also have a larger area, which enables the liquid crystal display device to have a larger area. Furthermore, since the light-emitting device is thin and consumes low power, the thickness and power consumption of a display device can also be reduced.

### [Embodiment 1]

This embodiment will describe an example of a method for manufacturing a light-emitting material of the present invention and a light-emitting element using the light-emitting material.

First, as first baking for manufacturing a light-emitting material of the present invention, gallium phosphide (GaP) and manganese (Mn) in powder form are mixed at a molar ratio of Mn:GaP = 1:0.3, and the mixture is baked at 1250°C for four hours with use of an alumina crucible, so that a first baked product is manufactured. It is preferable to use crushed GaP. In this embodiment, GaP that is crushed by using a ball mill with a rotation rate of 300 rpm for 20 minutes is used. After baking, the first baked product is allowed to cool down and taken out, so that a baked product which has a compound including at least Ga and Mn (MnGa or MnGaP in this embodiment) can be obtained.

Next, flux (for example, 0.1 mol of MgCl and 0.01 mol of NaCl) is added to 1 mol of ZnS which is a base material of a light-emitting material, and the mixture is baked at 750°C for four hours with use of an alumina crucible, so that ZnS:Cl is manufactured. Flux is used for improving crystallinity of the base material or for producing a single crystal. Further, by adding a compound including Cl as flux to ZnS which is the base material, conductivity of the light-emitting material can be improved. Note that this step may be omitted depending on crystallinity of the base material.

The baked ZnS:Cl is soaked in glacial acetic acid at 10% at 50°C for one hour and then washed with pure water. Then, the ZnS:Cl is dried at 150°C for two hours. Next, CuCl that is a compound including Cu to be a luminescent center is added thereto, and the mixture is baked at 1250°C for four hours with use of a graphite crucible. In this embodiment, a mixing ratio of ZnS:Cl and CuCl is set to be (ZnS:Cl):CuCl = 1:0.0015 at a molar ratio. After baking in a sealed evacuated tube, the compound is washed with pure water and then dried at 180°C for two hours, so that a second baked product ZnS:CuCl is manufactured.

Next, 1.5 g of the manufactured ZnS:CuCl is weighed, and 0.005 g of the baked product manufactured by the first baking is added to the weighed ZnS:CuCl.
Then, the mixture is baked at 650°C for four hours with use of an alumina crucible. After baking, the baked product is allowed to cool down and taken out, so that a light-emitting material of the present invention can be obtained.

A dispersion-type EL element is manufactured using the light-emitting material of the present invention. In this embodiment, a dispersion-type EL element having a stacked structure of a first electrode, a dielectric layer, a light-emitting layer, and a second electrode is formed. The first electrode is formed with a thickness of about 20 µm using silver as a material, and the second electrode is formed with a thickness of 110 nm using a compound of silicon oxide and indium thin oxide as a material. The dielectric layer is formed with a thickness of 10 to 20 µm using barium titanate as a material. The light-emitting layer includes the light-emitting material of the present invention at 76 wt% and cyanoresin used for its binder. Further, the light-emitting layer is formed with a thickness of about 30 to 50 µm.

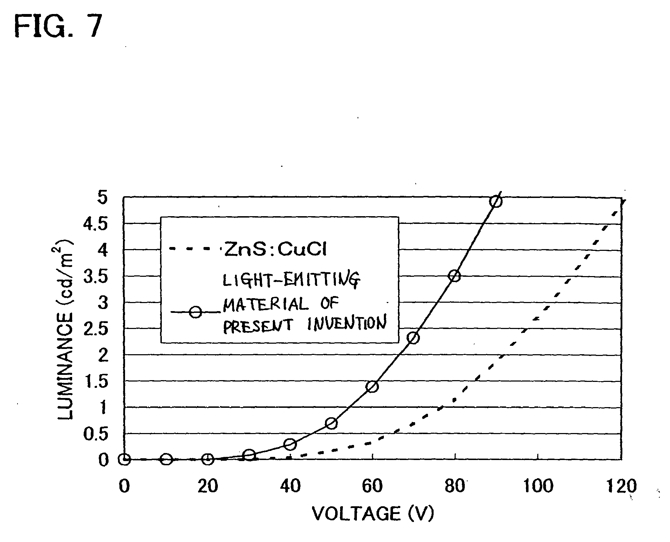

FIG 7 shows voltage-luminance characteristics at 1 kHz of the manufactured element. In FIG 7, a solid line represents a voltage-luminance characteristic of a dispersion-type EL element using the light-emitting material of the present invention. In addition, a dispersion-type EL element using ZnS:CuCl as a light-emitting material is manufactured as a comparative example, and a voltage-luminance characteristic thereof is represented by a dashed line in FIG 7. Note that a vertical axis indicates emission luminance (cd/m²), and a horizontal axis indicates voltage (V) in FIG 7.

From FIG. 7, it is found that driving at lower voltage and light emission with higher luminance are achieved in the dispersion-type EL element using the light-emitting material of the present invention which includes a compound including at least gallium and manganese, as compared with the dispersion-type EL element using ZnS:CuCl as a light-emitting material. When emission efficiency of the dispersion-type EL element using the light-emitting material of the present invention and that of the dispersion-type EL element as the comparative example are compared with each other, an emission start voltage is 80 V in the dispersion-type EL element using ZnS:CuCl as a light-emitting material, whereas an emission start voltage is 60 V in the dispersion-type EL element using the light-emitting material of the present invention. Note that the emission start voltage is a voltage at which emission of 1 cd/m² or higher is observed. Further, both dispersion-type EL elements showed equivalent color characteristics to each other as for emission color.

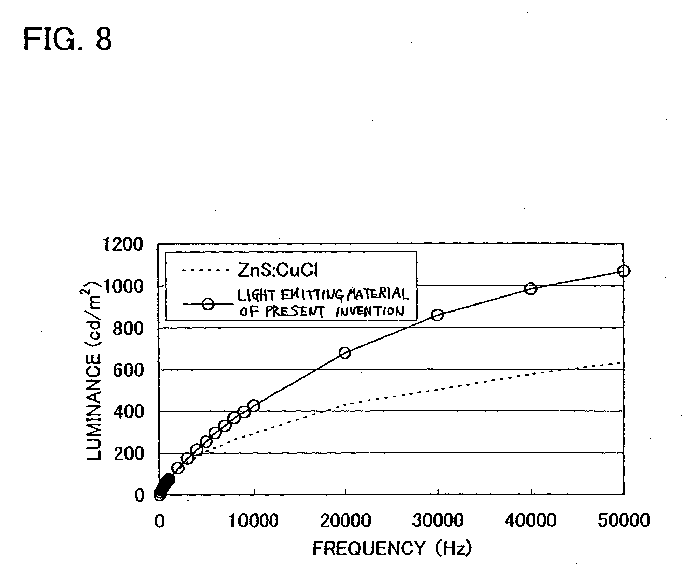

FIG 8 shows frequency-luminance characteristics of the manufactured dispersion-type EL elements. As measurement conditions, 400 V of an alternating voltage is applied to the dispersion-type EL elements, and each frequency thereof is made to vary in a range of from 0 to 50000 Hz. In such conditions, emission luminance of the dispersion-type EL elements is measured. In FIG 8, a vertical axis indicates emission luminance (cd/m²), and a horizontal axis indicates a frequency (Hz). In FIG. 8, a solid line represents a frequency-luminace characteristic of the dispersion-type EL element using the light-emitting material of the present invention, and a dashed line represents a frequency-luminance characteristic of the dispersion-type EL element using ZnS:CuCl as a light-emitting material, manufactured as a comparative example.

From FIG. 8, it is found that light emission with higher luminance is achieved in the dispersion-type EL element using the light-emitting material of the present invention which includes a compound including at least gallium and manganese, as compared with the dispersion-type EL element using ZnS:CuCl as a light-emitting material. The dispersion-type EL element using the light-emitting material of the comparative example has maximum luminance of 635.3 cd/m² when a frequency is 50000 Hz. On the other hand, the dispersion-type EL element using the light-emitting material of the present invention has maximum luminance of 1070 cd/m² when a frequency is 50000 Hz.

According to the above results, it is considered that a light-emitting element with low driving voltage and high emission luminance can be manufactured by using the light-emitting material of the present invention.

### [Embodiment 2]

This embodiment will describe an example of a method for manufacturing a light-emitting material of the present invention and a light-emitting element using the light-emitting material.

First, as first baking for manufacturing a light-emitting material of the present invention, gallium phosphide (GaP) and manganese (Mn) in powder form are mixed at a molar ratio of Mn:GaP = 1:0.3, and the mixture is baked for four hours with use of an alumina crucible. It is preferable to use crushed GaP. In this embodiment, GaP that is crushed by using a ball mill with a rotation rate of 300 rpm for 20 minutes is used. Further, in this embodiment, mixtures of GaP and Mn are baked at three patterns of temperature, at 650°C, 1250°C, and 1400°C.

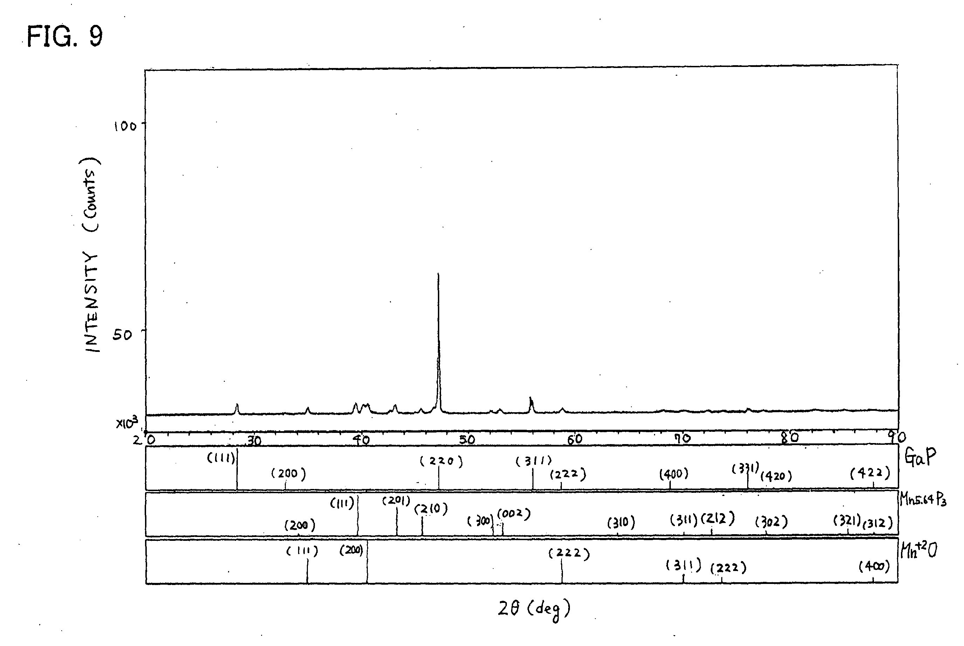

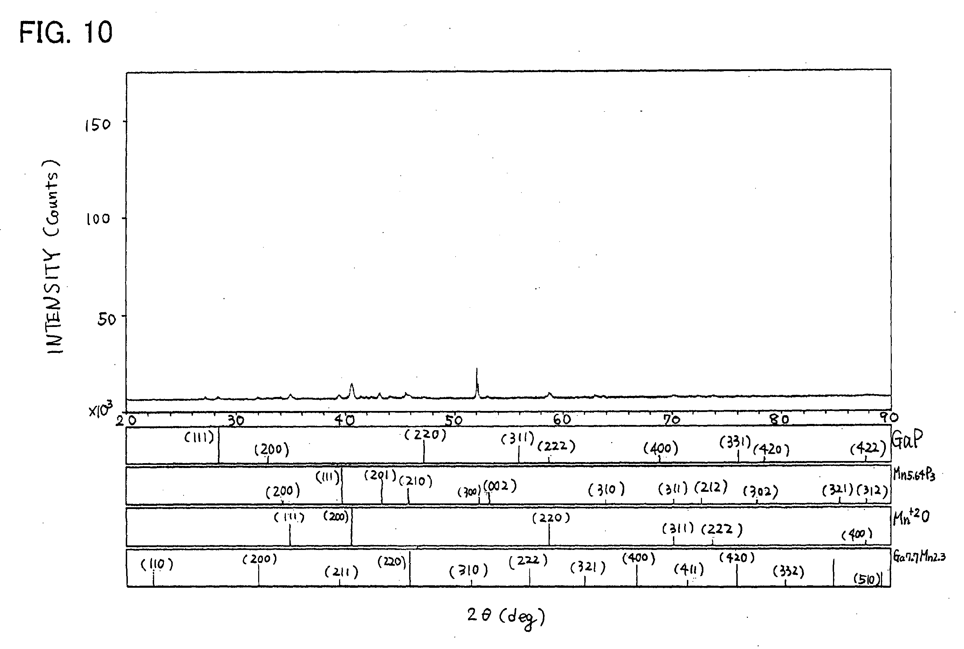

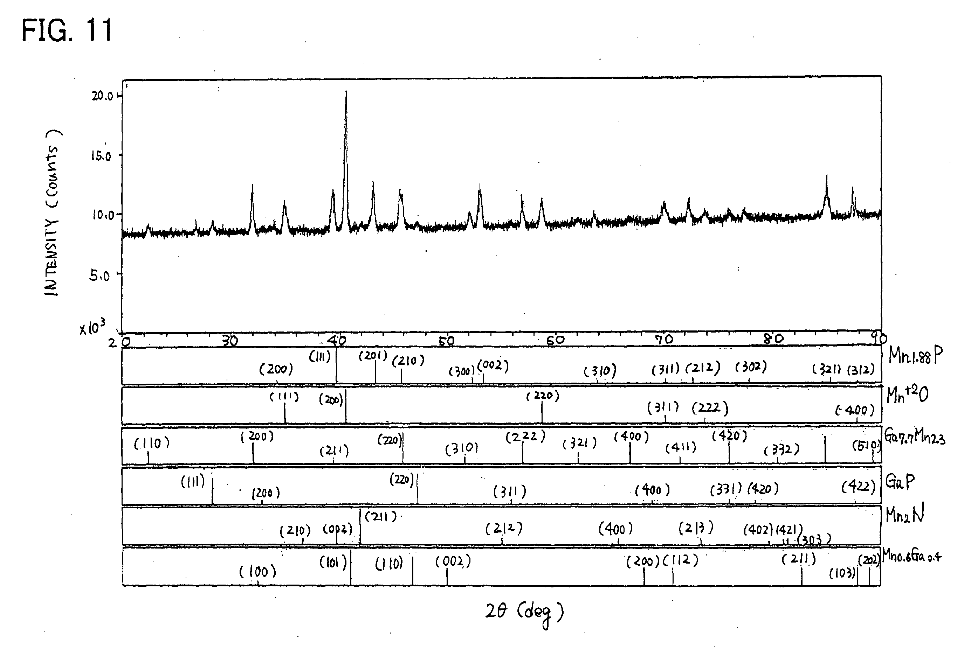

FIG 9, FIG. 10, and FIG 11 show measurement results of the mixtures baked at 650°C, 1250°C, and 1400°C, respectively, by an X-ray diffraction (XRD) method. FIG. 9 shows a measurement result of the mixture baked at 650°C, FIG 10 shows a measurement result of the mixture baked at 1250°C, and FIG 11 shows a measurement result of the mixture baked at 1400°C. In FIG 9, FIG 10, and FIG 11, each vertical axis indicates the diffraction intensity (arbitrary unit), and each horizontal axis indicates the diffraction angles (2θ) of X-rays.

In accordance with the measurement result of FIG 9, peak positions of the diffraction intensity of GaP, MnP, and MnO correspond to each other, and it is found that these three compounds are included in the baked product in the case where the baking is performed at 650°C. In other words, in the case where the baking temperature is 650°C, a compound including at least Ga and Mn, such as GaMn or MnGaP, cannot be obtained. Further, in accordance with the peak intensity, the concentration distribution of the compounds is GaP » MnP ≈ MnO, approximately.

In accordance with the measurement result of FIG 10, similarly, peak positions of the diffraction intensity of GaP, MnP, MnO, and GaMn correspond to each other, and it is found that these four compounds are included in the baked product in a case where the baking is performed at 1250°C. In other, words, in the case where the baking temperature is 1250°C, GaMn that is a compound including Ga and Mn can be obtained. Further, in accordance with the peak intensity, the concentration distribution of the compounds is MnP > MnO > GaP ≈ GaMn, approximately.

In accordance with the measurement result of FIG 11, peak positions of the diffraction intensity of MnP, MnO, GaMn, and GaP correspond to each other, and it is measured that these four compounds are included in the baked product in a case where the baking is performed at 1400°C. Further, in accordance with the peak intensity, the concentration distribution of the compounds is MnO > MnP ≈ GaMn > GaP, approximately.

In accordance with the measurement results of XRD shown here, it is found that concentration of Gap is reduced and concentration of MnP and GaMn (it may be also referred to as MnGa) is increased as the baking temperature is higher. Hereinafter, a baked product obtained by baking the mixture of GaP and Mn at X°C is referred to as a Mn-GaP baked product (X°C) for convenience in this specification. For example, a baked product obtained by baking the mixture of GaP and Mn at 650°C is referred to as a Mn-GaP baked product (650°C).

Next, flux (for example, 0. 1 mol of MgCl and 0.01 mol of NaCl) is added to 1 mol of ZnS which is a base material of a light-emitting material, and then the mixture is baked at 750°C for four hours with use of an alumina crucible, so that ZnS:Cl is manufactured. Flux is used for improving crystallinity of the base material or for producing a single crystal. This step may be omitted depending on the crystallinity of the base material.

The baked ZnS:Cl is soaked in glacial acetic acid of 10% at 50°C for one hour and then washed with pure water. After washing, the ZnS:Cl is dried at 180°C for two hours. Next, 0.003 mol of CuCl which is a compound including Cu to be a luminescent center is added, and the mixture is baked at 1250°C for four hours with use of a graphite crucible. After baking in a sealed evacuated tube, the compound is washed with pure water and dried at 180°C for two hours, so that ZnS:CuCl is manufactured.

Next, 1.5 g of the manufactured ZnS:CuCl is weighed, and 0.005 g of a Mn-GaP baked product (1250°C) is added to the weighed ZnS:CuCl. Then, the mixture is baked at 650°C for four hours with use of an alumina crucible. After baking, the baked product is allowed to cool and taken out, so that the light-emitting material of the present invention can be obtained.

Further, 1.5 g of the manufactured ZnS:CuCl is weighed, and 0.005 g of a Mn-GaP baked product (650°C) which does not include GaMn is added to the weighed ZnS:CuCl. Then, the mixture is baked at 650°C for four hours with use of an alumina crucible, so that a material used (hereinafter, referred to as a comparative material) is manufactured, as a comparative example.

Dispersion-type EL elements are manufactured using the light-emitting material of the present invention and the comparative material. In this embodiment, dispersion-type EL elements each of which has a stacked structure of a first electrode, a dielectric layer, a light-emitting layer, and a second electrode is formed. The first electrode is formed with a thickness of about 20 µm using silver as a material, and the second electrode is formed with a thickness of 110 nm using a compound of silicon oxide and indium tin oxide as a material. The dielectric layer is formed with a thickness of about 10 to 20 µm using barium titanate as a material. The light-emitting layer includes the light-emitting material of the present invention at 76 wt% and cyanoresin used for its binder. Further, the light-emitting layer is formed with a thickness of about 30 to 50 µm.

Emission efficiency of the dispersion-type EL element manufactured using the light-emitting material of the present invention and that of the dispersion-type EL element manufactured using the comparative material are compared. In the case of the dispersion-type EL element using the comparative material, an emission start voltage is 80 V, and maximum luminance is 1003 cd/m² when the frequency and the voltage are 50000 kHz and 400 V, respectively. On the other hand, in the case of the dispersion-type EL element using the light-emitting material of the present invention, an emission start voltage is 60 V, and maximum luminance is 1070 cd/m² when the frequency and the voltage are 50000 kHz and 400 V, respectively. According to the above results, it is considered that the light-emitting material of the present invention which includes a compound including at least Ga and Mn (GaMn in this embodiment) can be a light-emitting material with low driving voltage and high emission luminance.

### [Embodiment 3]

This embodiment will describe an example of a method for manufacturing a light-emitting material of the present invention and a light-emitting element using the light-emitting material. Note that description of manufacturing steps similar to those of Embodiment 2 is partly omitted.

First, a Mn-GaP baked product (1250°C) and ZnS:CuCl are manufactured according to the similar material and manufacturing steps to those of Embodiment 2.

Next, GaMn that contributes to reduction in voltage and improvement in luminance is selected and separated from the Mn-GaP baked product (1250°C) containing four compounds of GaP, MnP, MnO, and GaMn, so that purity of GaMn is improved. In the four compounds, GaMn and MnP are alloys having magnetism at the room temperature. That is, the Mn-GaP baked product (1250°C) is separated using a magnet at the room temperature, whereby GaMn and MnP can be selected. Accordingly, GaP that is an unreacted substance and MnO that is a by-product can be removed, so that purity of GaMn in the mixture can be improved.

Next, 1.5 g of ZnS:CuCl that is a base material is weighed, and 0.005 g of a compound having magnetism at the room temperature in the Mn-GaP baked product (1250°C), that is, GaMn or MnO, is added to the weighed ZnS:CuCl. Then, the mixture is baked at 650°C for four hours with use of an alumina crucible. After baking, the baked product is allowed to cool and taken out, so that the light-emitting material of the present invention can be obtained.

A dispersion-type EL element is manufactured using the light-emitting material of the present invention. In this embodiment, a dispersion-type EL element having a stacked structure of a first electrode, a dielectric layer, a light-emitting layer, and a second electrode is formed. The first electrode is formed with a thickness of about 20 µm using silver as a material, and the second electrode is formed with a thickness of 110 nm using a compound of silicon oxide and indium tin oxide as a material. The dielectric layer is formed with a thickness of about 10 to 20 µm using barium titanate as a material. The light-emitting layer includes the light-emitting material of the present invention at 76 wt% and cyanoresin used for its binder. Further, the light-emitting layer is formed with a thickness of about 30 to 50 µm.

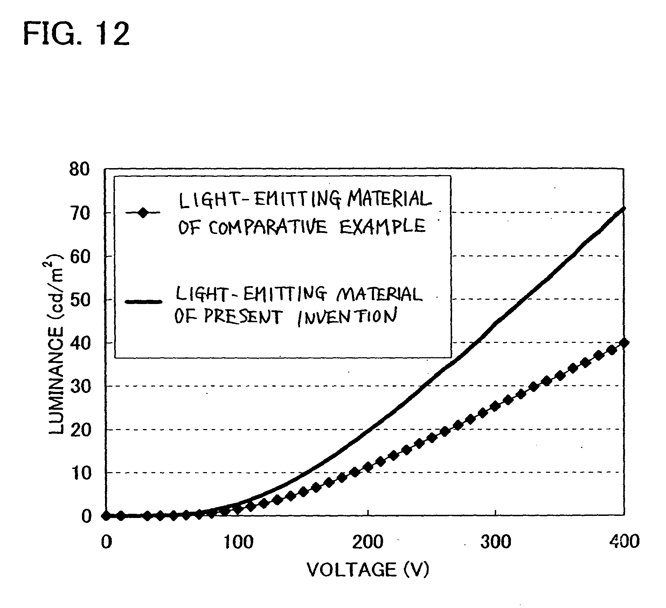

FIG 12 shows voltage-luminance characteristics at 1 kHz of the manufactured element. In FIG 12, a solid line represents a voltage-luminance characteristic of the dispersion-type EL element using the light-emitting material of the present invention to which GaMn with improved purity is added. In addition, a line with black square markers represents a voltage-luminance characteristic of a dispersion-type EL element manufactured as a comparative example. The comparative dispersion-type EL element is manufactured using a material which is formed as follows: 1.5 g of ZnS:CuCl is weighed; 0.005 g of the Mn-GaP baked product (1250°C) which is not separated using a magnet is added to the weighed ZnS:CuCl; and the mixture is baked at 650°C for four hours with use of an alumina crucible. Note that in FIG 12, a vertical axis indicates emission luminance (cd/m²), and a horizontal axis indicates voltage (V).

From FIG 12, it is found that driving at low voltage and light emission with higher luminance are achieved in the dispersion-type EL element using the light-emitting material to which GaMn with improved purity is added, as compared with the dispersion-type EL element using the material that is manufactured without separating the Mn-GaP baked product (1250°C) using a magnet.

According to the above results, it is considered that the compound including at least Ga and Mn particularly contributes to reduction in driving voltage and high emission luminance in the light-emitting material of the present invention. With use of the light-emitting material formed by adding the above compound with improved purity to the base material, a light-emitting element with lower driving voltage and further improved emission luminance can be obtained.

### [Embodiment 4]

This embodiment will describe an example of a method for manufacturing a light-emitting material of the present invention and a light-emitting element using the light-emitting material. Note that description of manufacturing steps similar to Embodiment 1 is partly omitted.

First, as first baking for manufacturing a light-emitting material of the present invention, 0.5 mol of gallium phosphide (GaP) and 0.5 mol of manganese (Mn) in powder form are mixed, and the mixture is baked at 1250°C for three hours with use of an alumina crucible, so that a first baked product is manufactured. It is preferable to use crushed GaP. By this baking, a baked product which has a compound including at least Ga and Mn (MnGa or MnGaP in this embodiment) can be obtained.

Next, 0.0025 mol of Mn to be a luminescent center is added to 1 mol of ZnS that is a base material of the light-emitting material, and then the mixture is baked at 1000°C for four hours in a nitrogen atmosphere. After baking, the baked product is washed with pure water, so that a second baked product, ZnS:Mn, is manufactured.

Then, 1.5 g of the manufactured ZnS:Mn is weighed, and 0.01 g of the first baked product is added to the weighed ZnS:Mn. Then, the mixture is baked at 650°C for four hours in a nitrogen atmosphere. Thus, the light-emitting material of the present invention which includes the base material, the luminescent center material, and the compound including at least Ga and Mn can be obtained.

Next, a dispersion-type EL element is manufactured using the light-emitting material of the present invention. In this embodiment, a dispersion-type EL element having a stacked structure of a first electrode, a dielectric layer, a light-emitting layer, and a second electrode is formed. The first electrode is formed with a thickness of about 20 µm using silver as a material, and the second electrode is formed with a thickness of 110 nm using a compound of silicon oxide and indium tin oxide as a material. The dielectric layer is formed with a thickness of about 10 to 20 µm using barium titanate as a material. The light-emitting layer includes the light-emitting material of the present invention at about 76 wt% and cyanoresin used for its binder. Further, the light-emitting layer is formed with a thickness of about 30 to 50 µm. Note that the light-emitting material of the present invention is crushed to be in particle form of 50 µm or less after third baking and used for the light-emitting layer.

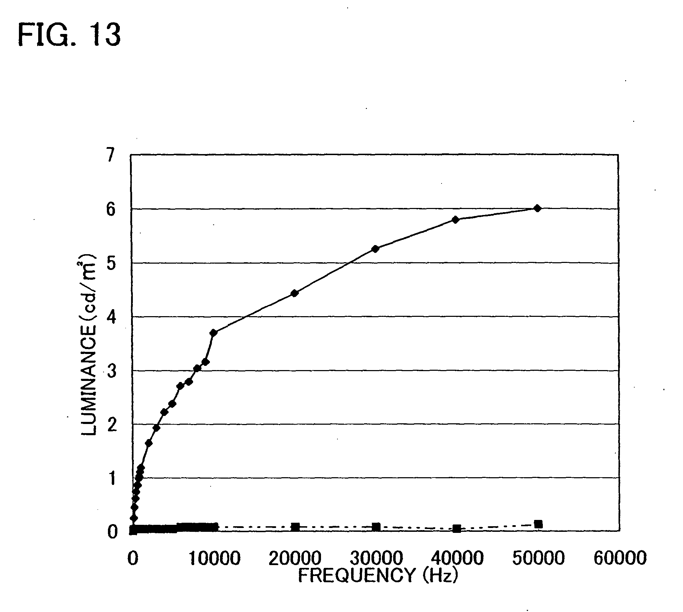

FIG 13 shows frequency-luminance characteristics of the thus manufactured dispersion-type EL element. As measurement conditions, 400 V of an alternating voltage is applied to the dispersion-type EL element, and a frequency thereof is made to vary in a range of 0 to 50000 Hz. In such conditions, emission luminance of the dispersion-type EL element is measured. In FIG. 13, a vertical axis indicates emission luminance (cd/m²), and a horizontal axis indicates a frequency (Hz). In FIG 13, a solid line represents a frequency-luminance characteristic of the dispersion-type EL element using the light-emitting material of the present invention. In addition, a dispersion-type EL element using ZnS:Mn as a light-emitting material is manufactured as a comparative example, and a frequency-luminance characteristic thereof is represented by a dashed line in FIG 13.

Since ZnS:Mn used for the light-emitting material in this embodiment emits light by inner-shell transition, as shown in FIG 13, EL emission is not observed in the comparative example which does not include a light-emitting excited material which discharges hot electrons. On the other hand, EL emission of 6.7 cd/m² is observed in the dispersion-type EL element using the light-emitting material of the present invention when the frequency thereof is 50000 Hz. Accordingly, it is considered that the compound including at least manganese and gallium serves as an electrode that discharges hot electrons to increase an electric field locally in the light-emitting material of the present invention. When the light-emitting material includes a compound serving as an electrode, current becomes easy to flow in the light-emitting layer; therefore, a light-emitting element can operate at low voltage by using the light-emitting material of the present invention.
This application is based on Japanese Patent Application serial no. 2007-178012 filed with Japan Patent Office on July 6, 2007, the entire contents of which are hereby incorporated by reference.

## Claims

1. A light-emitting material comprising:
a base material;
an element to be a luminescent center; and
a compound including at least manganese and gallium, which is formed by mixing manganese with one of gallium arsenide, gallium phosphide, and gallium antimonide, and then baking them.

2. A light-emitting material manufactured by baking after mixing a first baked product and a second baked product,
wherein the first baked product is formed by mixing manganese with one of gallium arsenide, gallium phosphide, and gallium antimonide, and then baking them, and
wherein the second baked product is formed by mixing a base material with an element for forming a luminescent center material or a compound including the element.

3. A light-emitting material comprising:
a base material;
an element to be a luminescent center; and
at least one of manganese gallium and manganese gallium phosphide.

4. The light-emitting material according to any one of claims 1 to 3, wherein as the base material, any one of zinc sulfide, cadmium sulfide, calcium sulfide, yttrium sulfide, gallium sulfide, strontium sulfide, barium sulfide, zinc oxide, yttrium oxide, aluminum nitride, gallium nitride, indium nitride, zinc selenide, zinc telluride, calcium gallium sulfide, strontium gallium sulfide, and barium gallium sulfide is included.

5. The light-emitting material according to any one of claims 1 to 4, wherein as the element to be the luminescent center, one or more of elements of manganese, copper, samarium, terbium, erbium, thulium, europium, cerium, and praseodymium is included.

6. The light-emitting material according to claim 5, wherein as the element to be the luminescent center, one or more of elements of fluorine, chlorine, bromine, iodine, and silver is further included.

7. A light-emitting element comprising a light-emitting layer between a pair of electrodes,
wherein the light-emitting layer comprises a light-emitting material which includes a base material, an element to be a luminescent center, and a compound including at least manganese and gallium, and
wherein the compound is formed by mixing manganese with one of gallium arsenide, gallium phosphide, and gallium antimonide with and then baking them.

8. The light-emitting element according to claim 7, wherein as the base material, any one of zinc sulfide, cadmium sulfide, calcium sulfide, yttrium sulfide, gallium sulfide, strontium sulfide, barium sulfide, zinc oxide, yttrium oxide, aluminum nitride, gallium nitride, indium nitride, zinc selenide, zinc telluride, calcium gallium sulfide, strontium gallium sulfide, and barium gallium sulfide is included.

9. The light-emitting element according to claim 7 or 8, wherein as the element to be a luminescent center, one or more of elements of manganese, copper, samarium, terbium, erbium, thulium, europium, cerium, and praseodymium is included.

10. The light-emitting element according to claim 9, wherein as the element to be a luminescent center, one or more of elements of fluorine, chlorine, bromine, iodine, and silver is further included.

11. A light-emitting device comprising the light-emitting element described in any one of claims 7 to 10.

12. An electronic device comprising the light-emitting element described in any one of claims 7 to 11.

13. A method for manufacturing a light-emitting material comprising the steps of:
forming a first baked product by performing first baking after mixing gallium arsenide, gallium phosphide, or gallium antimonide with manganese;
forming a second baked product by performing second baking after mixing a base material with an element for forming a luminescent center material or a compound including the element; and
performing third baking after mixing the first baked product with the second baked product.

14. The method for manufacturing a light-emitting material according to claim 13, wherein each of the first baking and the second baking is performed at from 700 to 1500°C.

15. The method for manufacturing a light-emitting material according to claim 13 or 14, wherein the third baking is performed at a lower temperature than the first baking and the second baking.
